# EUROPEAN PATENT SPECIFICATION

(11) **EP 0 897 368 B1**
(45) Date of publication and mention of the grant of the patent: **08.03.2000**
(21) Application number: 97919547.6
(22) Date of filing: 24.04.1997
(51) Int. Cl.: B64F 1/22, B60P 3/11

(54) **AIRCRAFT-WHEEL LIFTING DEVICE**
HEBEVORRICHTUNG FÜR FLUGZEUGRAD
DISPOSITIF POUR SOULEVER LES ROUES D'UN AERONEF

(30) Priority: 25.04.1996 GB 9608561
(43) Date of publication of application: 24.02.1999
(73) Proprietor: ILES, Frank, Redruth, Cornwall TR16 6LP (GB)
(72) Inventor: ILES, Frank, Redruth, Cornwall TR16 6LP (GB)
(74) Representative: Harrison, Ivor Stanley
(86) International application number: PCT/GB97/01139
(87) International publication number: WO 97/39947

(56) References cited:
- DE-A- 3 327 629
- DE-U- 8 911 372

## Description

The present invention relates to a device for lifting a wheel assembly of an aircraft, particularly but not exclusively a twin nosewheel assembly, for aircraft ground handling purposes.

The present invention particularly aims to provide a device for lifting the nosewheel assembly of an aircraft, which is suitable for use in confined areas, but not exclusively.

Document DE-A-3 327 629 discloses a device for lifting a wheel assembly of an aircraft according to the preamble of claim 1.

The present invention provides a device for lifting a wheel assembly of an aircraft, particularly but not exclusively a twin nosewheel assembly, for aircraft ground handling purposes, the device comprising the features according to claim 1.

Although the device may be embodied as a self-propelled towing dolly or the like, it is envisaged that the device will constitute part of an aircraft ground handling machine. In a preferred embodiment, therefore, the device also comprises means connectible to a bearing structure or chassis of an aircraft ground handling machine to enable the raising and lowering of the wheel support means and wheel cradled thereby.

The present invention also provides an aircraft ground handling machine, such as a towing dolly or a tractor, having a device according to claim 1.

The wheel support means may be constituted by wheel-engaging surfaces and may comprise a fixed support means which defines the first support surface and movable support means which defines the second support surface and is rotatable relative to the fixed support means. The wheel support means may, however, each comprise laterally-disposed and vertically spaced-apart pins which define notional wheel-engaging surfaces but which have the advantages that they have utility irrespective of the diameter of the wheel. The support means may be rotatable relative to each other about an axis which is substantially vertical in the normal condition of use, so that the support means close around the wheel laterally in the manner of a jaw.

In a preferred embodiment, the movable wheel support means rotate relative to the fixed wheel support means about a transverse axis which is substantially horizontal in the normal condition of use, the movable support means being disposed on the same side of the wheel as the fixed support means (that is, adjacent the first portion of the circumference of the wheel) in the first configuration and being swung over the wheel into the second configuration so that, in the second configuration, the movable support means are disposed on the opposite side of the wheel from the fixed support means. Where the wheel support means comprise wheel-engaging surfaces, they are preferably curved surfaces which are concentric or substantially concentric about the said transverse axis, although the wheel support means may as indicated above comprise pins; the pins may be carried by side plates for location and rotation purposes relative to the wheel and may be themselves rotatable or may carry rotatable sleeves.

In the preferred embodiment for the lifting of a twin nosewheel assembly, the first support surface of the fixed wheel support means corresponds substantially in width to the overall width of the twin nosewheel and is engageable by the two wheels thereof, and the movable wheel support means comprise two members which are rotatable in unison over respective wheels of the twin nosewheel assembly, on either side of the central nosewheel strut, commonly known as an oleo leg, and each of which defines a respective second support surface portion engageable with the respective wheel in the second configuration.

Preferably, on the first support surface, there are two pressure switches operable by the two wheels of the twin nosewheel to enable the rotation of the movable wheel support means, the pressure switches being in positions such that they can both be operated to enable the rotation of the movable support means only when the twin nosewheel is correctly located against the first support surface. This prevents the movable wheel support means from operating in a misaligned condition of the nosewheel and hence from fouling the nosewheel.

The present invention will now be more particularly described, purely by way of example, with reference to the accompanying drawings, in which:

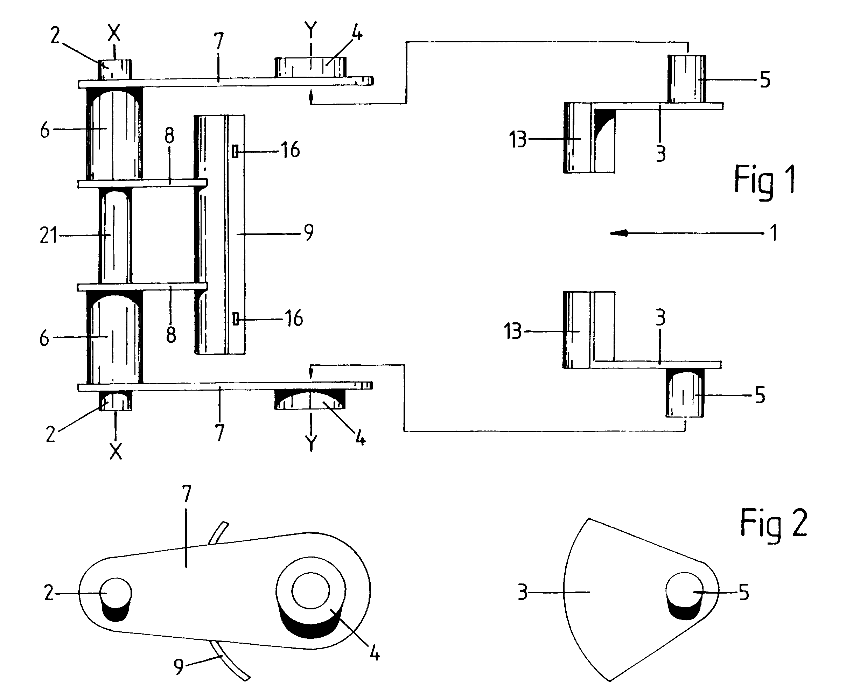

Figure 1 is a partially exploded plan view of a device for lifting a wheel of an aircraft, according to one embodiment of the present invention;
Figure 2 is a side view of the device of Figure 1;
Figure 3 is a plan view of the device in an initial operating condition;
Figures 4 and 5 are a plan view and a side view, respectively, of the device in a subsequent operating condition;
Figures 6 and 7 are a plan view and a side view, respectively, of the device in a further operating condition;
Figure 8 is a side view of the device in yet another operating condition;
Figure 9 is a side view, corresponding to Figure 8, of a variant of the device and
Figure 10 is a plan view, corresponding to Figure 1, of another variant.

With reference now to the drawings, a device for lifting a twin nosewheel of an aircraft comprises a structure, generally indicated 1, which is mounted on chassis members 11 of an aircraft ground handling vehicle (not shown in its entirety) for rotation about a transverse axis X-X which is substantially horizontal in the normal condition of use of the device and which is defined by two main supporting trunnions 2 located within bearing housings 10 on the chassis members 11. A shaft 21 extends coaxially between the two trunnions and two sleeves or collars 6 are fixed to the shaft 21 adjacent its opposite ends.

One end of a respective side member 7 is fixed to the outer end of each collar 6 and one end of a respective support arm 8 is fixed to the inner end of each collar 6. The side members 7 and the support arms 8 project in the same direction away from the axis X-X and, being fast with the collars 6 which are themselves fixed to the shaft 21, are rotatable together about that axis.

At their free ends, that is, the ends opposite the collars 6, each side member 7 and the two support arms 8 carry respective wheel supports 13, 9. The two support arms 8 together carry a fixed wheel support 9 which extends transversely over a substantial part of the distance between the two side members 7. The side members 7 carry respective movable wheel supports 13 which are attached to support plates 3 which are rotatable, by means of trunnions 5, in respective bearing housings 4 aligned on a common transverse axis Y-Y adjacent the free ends of the side members 7. This latter axis Y-Y is parallel to the axis X-X. The fixed wheel support 9 and the rotatable wheel supports 13 define respective curved support surfaces which are concentric with the axis of rotation Y-Y of the rotatable supports 13.

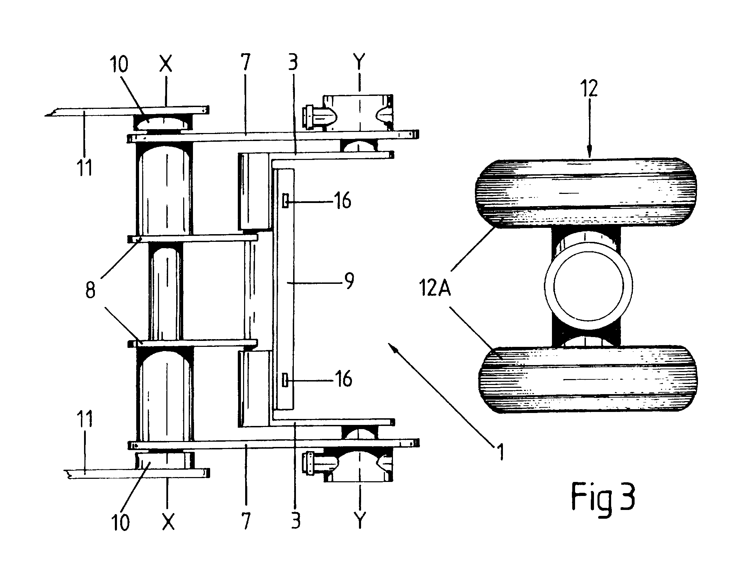

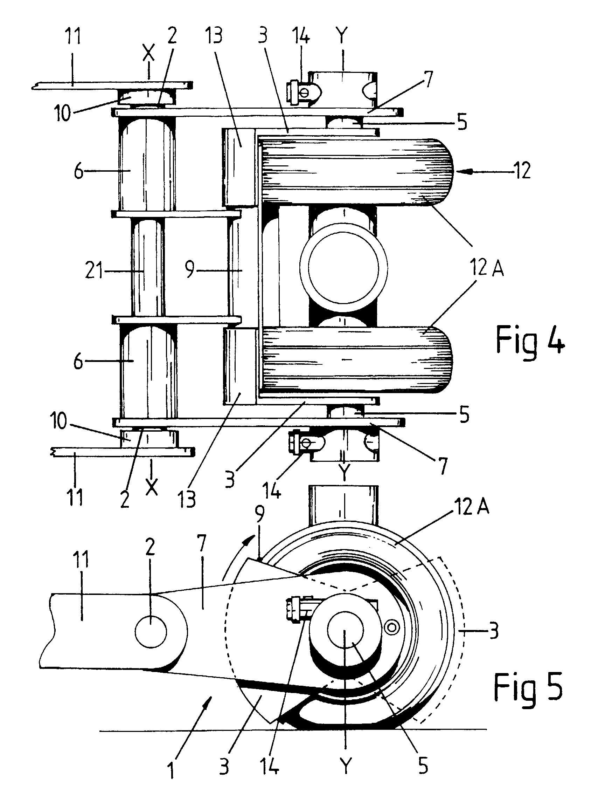

In use of the device, the device is first aligned with a twin nosewheel unit 12 of an aircraft, as shown in Figure 3, by the manoeuvring of the aircraft ground handling vehicle and the device is then moved towards the nosewheel unit 12 until the two wheels 12A thereof are located in the bifurcated structure formed by the two side members 7 and rest firmly against the curved surface of the fixed wheel support 9, as shown in Figures 4 and 5. In this condition, the rotatable wheel supports 13 are disposed in a position in which they overlie the fixed wheel support 9, radially outwardly thereof with slight clearance, to permit the support 9 to be placed firmly against the wheels 12A.

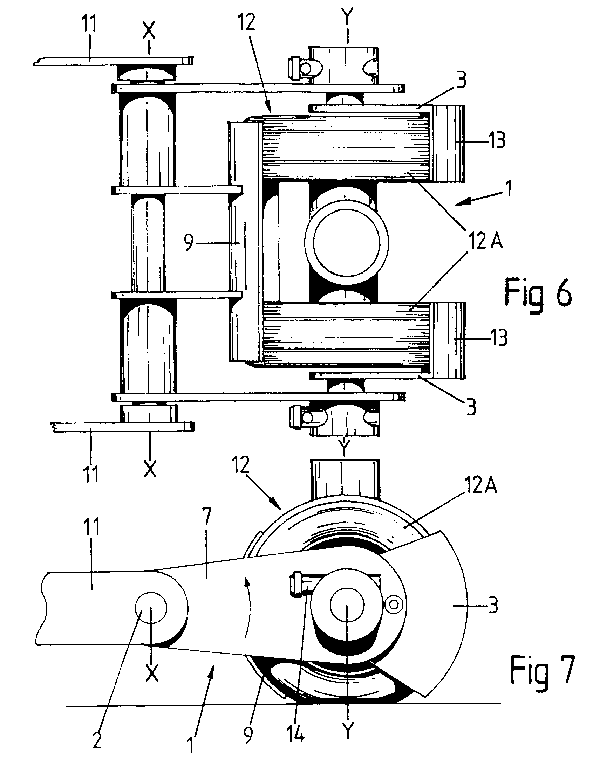

When the nosewheel unit 12 is properly positioned against the fixed wheel support 9, the two wheels 12A operate respective pressure sensitive switches or pads 16 on the surface of the fixed wheel support 9 to enable the rotation of the rotatable wheel supports 13, without their interfering with the tyres of the wheels 12A. As shown in broken outline in Figure 5, the wheel supports 13 rotate through an obtuse angle, preferably of about 180°, relative to the fixed wheel support 9, swinging over the wheels 12A on either side of the central strut of the nosewheel unit 12. The rotatable wheel supports 13 thus move from the configuration of Figures 3, 4 and 5, in which the fixed and rotatable wheel supports 9, 13 are disposed on the same side of the nosewheel unit 12, to the configuration of Figure 6 and 7 where the supports 9, 13 are disposed on opposite sides of the wheels, with the curved surfaces of the rotatable supports 13 in engagement with portions of the circumferences of the wheels 12A opposite the portions of the circumferences located against the fixed support 9. In this configuration, the wheels 12A are cradled by the supports 13, 9.

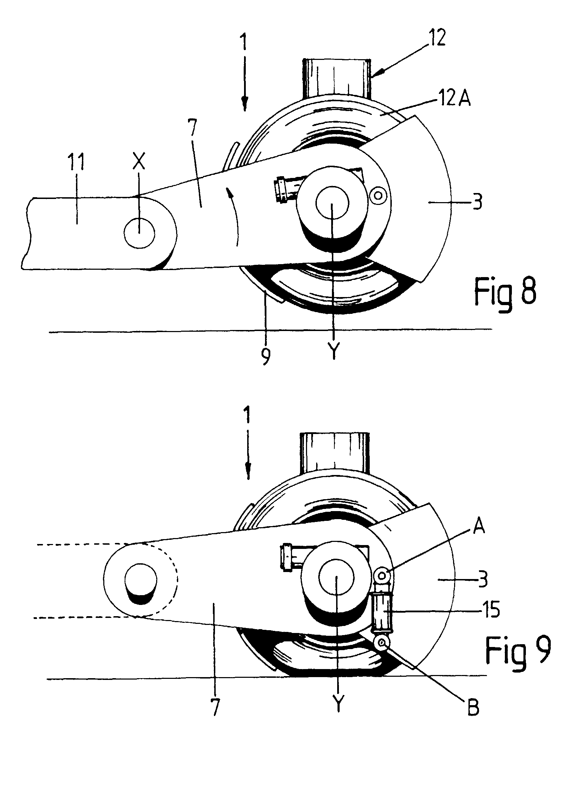

Once the configuration of Figures 6 and 7 has been reached, the device is raised relative to the aircraft handling machine, as shown in Figure 8, to lift the nosewheel unit 12 clear of the ground so that the aircraft, for example a helicopter, can be manoeuvred by the ground handling vehicle. With the nosewheel unit 12 in the raised position, some of the weight of the aircraft bears on the ground handling vehicle, increasing the friction between the drive wheels of the vehicle and the ground and helping to prevent slippage of those wheels on the ground.

The rotatable wheel supports 13 are rotated by rotary actuators 14, for example of the rack-and-pinion type in which the rack is constituted by the rod of the actuator and the pinion is connected to or formed on the trunnion 5 of the support plate 3. The raising and lowering of the device relative to the ground handling vehicle may be effected by actuators acting, for example, between the chassis members 11 and the shaft 21 but, in an alternative arrangement shown in Figure 9, this raising and lowering may be effected by an actuator 15 attached at A to one of the side members 7 and attached at B to an extension (not shown) of one of the chassis members 11. In order to prevent the device from being raised until the rotatable wheel supports 13 are safely in the configuration of Figures 6 and 7, a microswitch (not shown) or the like, which, when open, disables the actuators for raising the device, may be provided in a position where it can be closed by the supports 13 to enable those actuators only when the supports 13 are in the proper position.

The inner supports 8 may be variable in length by means of hydraulic cylinders so that the fixed wheel support 9 can be moved in a horizontal plane (in the normal condition of use) to compensate for any variation in the diameters of different aircraft nosewheels. Alternatively or in addition, the fixed wheel support 9 may be slidable on the inner supports 8, for example by means of an hydraulic actuator, so that the support 9 can be moved towards the wheels 12A if necessary to compensate for the gap which may open at the top of the fixed support 9, as shown in Figure 8, and thus to prevent the wheel from dropping slightly when the device is raised. Alternatively or additionally, the supports 13 may be movable relative to plates 3, or the bearing housings 4 may be longitudinally adjustable in the side members 7, in order to maintain the axis Y-Y substantially in common with the axis of the wheels.

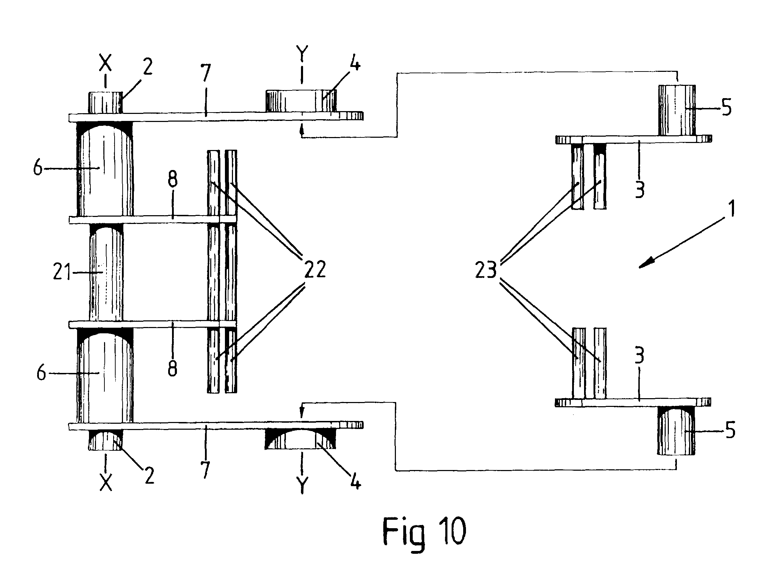

In order to provide for greater flexibility of use with aircraft wheels of different diameters, particularly with the ability to vary the spacing between the wheel supports referred to in the preceding paragraph, the curved support surfaces 9, 13 may be replaced with laterally-extending pins or dowels 22, 23, as shown in Figure 10. The pins may be rotatably mounted or may carry rotatable sleeves to prevent any undue chafing against the tyre surface in use.

## Claims

1. A device for lifting a wheel assembly (12) of an aircraft and including first (9) and second (13) wheel-engaging support means which are connectable to a bearing structure (11) of an aircraft ground handling machine and in use are rotatable relative to each other between open and wheel-cradling configurations, characterised in that the device includes means (15) connectable to the bearing structure to enable the raising or lowering of the support means relative to the ground when in the wheel-cradling configuration.

2. A device according to claim 1 in which the support means (9,13) are pivotably attachable to the bearing structure (11) about a transverse horizontally-disposed axis (X-X).

3. A device according to claim 1 or claim 2, in which the second wheel support means (13) are rotatably attached to the first support means about a transverse horizontally-disposed axis (Y-Y).

4. A device according to any preceding claim, in which the wheel-engaging support means (9, 13) comprise wheel support surfaces.

5. A device according to any preceeding claim, in which the wheel-engaging support means comprise laterally-disposed and vertically spaced-apart pins (22, 23) which optionally carry rotatable sleeves.

6. A device according to claim 4 as dependent on claim 3, in which the wheel support surfaces are curved about an axis which substantially corresponds with the axis of the second wheel support means (Y-Y).

7. A device according to any preceding claim, in which the second wheel support means comprise two laterally spaced-apart supports (13; 23) carried on a common axis of rotation (Y-Y) for rotational movement in unison between said open and wheel cradling configurations.

8. A device according to claim 7, in which the first wheel support means (9; 22) are attached to inner support arms (8) which extend forwardly from a pivotable shaft (21) adapted to be carried by the bearing structure (11) and the second wheel support means (13; 23) are attached to outer support arms (7) which also extend forwardly from the pivotable shaft (21), the outer support arms (7) defining a bifurcated twin-wheel receiving space and the first wheel support means (9; 22) extending transversely over a substantial part of the distance between the outer support arms (7), whereby in use the first wheel support means supports both wheels of a twin wheel unit (12) and each support of the second wheel support means supports a respective one of said twin wheels.

9. A device according to claim 8, in which said second wheel support means (13; 23) overlie radially said first wheel support means (9; 22) in the open configuration.

10. A device according to any preceding claim including pressure-sensitive switch means (16) carried by the first wheel support means (9; 22) and operatively connected to the second wheel support means (13; 23) to actuate rotation thereof when an aircraft wheel (12A) is in position against said first wheel support means.

11. A device according to claim 10, including two pressure-sensitive switch means (16) positioned laterally spaced apart on said first wheel support means to be actuated by respective wheels (12A) of an aircraft twin wheel unit (12) to enable rotation of said second wheel support means only when the twin wheel unit (12) is correctly located against said first wheel support means.

12. A device according to any preceding claim, in which the first (9) and/or second (13) wheel-engaging support means are horizontally adjustable on their respective support arms (8, 3) to vary their distance from the axis of rotation (Y-Y) of the second support means, whereby to compensate for aircraft wheels of different diameter.

13. An aircraft ground handling machine including a device for lifting a wheel assembly of an aircraft as claimed in any of claims 1 to 12.

## Patentansprüche

1. Hebevorrichtung für eine Radgruppe (12) eines Flugzeugs mit einer ersten (9) und einer zweiten (13) Radaufnahme-Einrichtung, die mit einer Lagerstruktur (11) einer Boden-Verschiebemaschine für Flugzeuge verbindbar und betrieblich relativ zueinander zwischen einem Offen- und einem Radaufnahmezustand schwenkbar sind, dadurch gekennzeichnet, dass die Vorrichtung Einrichtungen (15) aufweist, die mit der Lagerstruktur verbindbar sind, um die Aufnahme-Einricntungen im Radaufnahmezustand relativ zum Boden zu heben oder zu senken.

2. Vorrichtung nach Anspruch 1, bei der die Aufnahme-Einrichtung (9, 13) um eine waagerecht querverlaufende Achse (X-X) schwenkbar an die Lagerstruktur (11) ansetzbar ist.

3. Vorrichtung nach Anspruch 1 oder 2, bei der die zweite Radaufnahme-Einrichtung (13) um eine waagerecht querverlaufende Achse (Y-Y) schwenkbar an der ersten Aufnahme-Einrichtung befestigt ist.

4. Vorrichtung nach einem vorhergehenden Anspruch, bei der die Radaufnahme-Einrichtungen (9, 13) radaufnehmende Flächen aufweisen.

5. Vorrichtung nach einem vorhergehenden Anspruch, bei der die Radaufnahme-Einrichtungen seitlich liegende, vertikal beabstandete Zapfen (22, 23) aufweisen, auf die ggf. drehbare Hülsen aufgeschoben sind.

6. Vorrichtung nach Anspruch 4 in Abhängigkeit von Anspruch 3, bei der die radaufnehmenden Flächen um eine Achse gekrümmt sind, die im wesentlichen der Achse der zweiten Radaufnahme-Einrichtung (Y-Y) entspricht.

7. Vorrichtung nach einem vorhergehenden Anspruch, bei der die zweite Radaufnahme-Einrichtung zwei seitlich beabstandete Auflager (13; 23) aufweist, die auf einer gemeinsamen Schwenkachse (Y-Y) zwischen dem Offen- und dem Radaufnahmezustand schwenkbar gelagert sind.

8. Vorrichtung nach Anspruch 7, bei der die erste Radaufnahme-Einrichtung (9; 22) an inneren Stützarmen (8) befestigt ist, die von einer von der Lagerstruktur (11) tragbaren schwenkbaren Welle (21) nach vorn vorstehen und bei der die zweite Radaufnahme-Einrichtung (13, 23) an äußeren Lagerarmen (7) befestigt ist, die ebenfalls von der schwenkbaren Welle (21) her nach vorn abstehen, wobei die äußeren Lagerarme (7) einen Zwillingsräder aufnehmenden gegabelten Raum umfassen und die erste Radaufnahme-Einrichtung (9; 22) sich quer über einen erheblichen Teil des Abstands der äußeren Lagerarme (7) erstreckt, so dass im Betrieb die erste Radaufnahme-Einrichtung beide Räder einer Zwillingsradgruppe (12) und jedes Auflager der zweiten Radaufnahme-Einrichtung jeweils eines der Räder der Zwillingsradgruppe aufnehmen.

9. Vorrichtung nach Anspruch 8, bei der die zweite Radaufnahme-Einrichtung (13; 23) im Offenzustand die erste Radaufnahme-Einrichtung (9; 22) radial umgreift.

10. Vorrichtung nach einem vorhergehenden Anspruch mit druckempfindlichen Schalteinrichtungen (16), die auf der ersten Radaufnahme-Einrichtung (9; 22) angeordnet und betrieblich mit der zweiten Radaufnahme-Einrichtung (13; 23) verbunden sind, um deren Schwenkbewegung auszulösen, wenn ein Flugzeugrad (12A) an der ersten Radaufnahme-Einrichtung anliegt.

11. Vorrichtung nach Anspruch 10 mit zwei druckempfindlichen Schalteinrichtungen (16), die seitlich beabstandet auf der ersten Radaufnahme-Einrichtung (9) angeordnet und von den Rädern (12A) der Zwillings-Radgruppe (12) eines Flugzeugs betätigbar sind, um die Schwenkbewegung der zweiten Radaufnahme-Einrichtung (13) nur auszulösen, wenn die Zwillings-radgruppe (12) in ihrer Solllage an der ersten Radaufnahme-Einrichtung (9) anliegt.

12. Vorrichtung nach einem vorhergehenden Anspruch, bei der die erste (9) und/oder die zweite (13) Radaufnahme-Einrichtung auf ihren Lagerarmen (8, 3) waagerecht justierbar ist, um ihren Abstand zur Schwenkachse (Y-Y) der zweiten Radaufnahme-Einrichtung zu variieren und so auf Flugzeugräder unterschiedlichen Durchmessers einzustellen.

13. Boden-Verschiebemaschine für Flugzeuge mit einer Vorrichtung zum Anheben einer Flugzeug-Radgruppe nach einem der Ansprüche 1 bis 12.

## Revendications

1. Dispositif pour soulever un ensemble de roues (12) d'un avion, comprenant des premier (9) et seconds (13) supports engageant les roues qui peuvent être reliés à une structure de support (11) d'une machine de manutention au sol d'un avion et qui, en utilisation, peuvent pivoter l'un par rapport à l'autre entre une configuration ouverte et une configuration d'enveloppement des roues, caractérisé en ce que le dispositif comprend des moyens (15) pouvant être reliés à la structure de support pour permettre le soulèvement ou l'abaissement des supports par rapport au sol lorsque ceux-ci sont dans la configuration d'enveloppement des roues.

2. Dispositif selon la revendication 1 dans lequel les supports (9,13) peuvent être fixés de façon pivotante à la structure de support (11) autour d'un axe transversal (X-X) disposé horizontalement.

3. Dispositif selon la revendication 1 ou la revendication 2, dans lequel les seconds supports de roues (13) sont fixés de façon pivotante au premier support autour d'un axe transversal (Y-Y) disposé horizontalement.

4. Dispositif selon l'une quelconque des revendications précédentes, dans lequel les supports (9,13) engageant les roues comprennent des surfaces de support de roue.

5. Dispositif selon l'une quelconque des revendications précédentes, dans lequel les supports engageant les roues comprennent des axes (22,23), disposés latéralement et écartés verticalement, qui portent de façon facultative des manchons tournants.

6. Dispositif selon la revendications 4, lorsque celle-ci dépend de la revendication 3, dans lequel les surfaces de support des roues sont incurvées autour d'un axe qui correspond sensiblement à l'axe (Y-Y) des seconds supports de roues.

7. Dispositif selon l'une quelconque des revendications précédentes, dans lequel les seconds supports de roues comprennent deux appuis latéraux (13,23) écartés l'un de l'autre, qui sont portés par un axe de rotation commun (Y-Y) pour effectuer à l'unisson un mouvement de rotation entre la configuration ouverte et la configuration d'enveloppement des roues.

8. Dispositif selon la revendication 7, selon lequel le premier support de roues (9,22) est fixé à des bras de support intérieurs (8) qui sont orientés vers l'avant à partir d'un bras pivotant (21) conçu pour être porté par la structure de support (11), et les seconds supports de roues (13,23) sont fixés à des bras de support extérieurs (7) qui sont aussi orientés vers l'avant depuis l'arbre pivotant (21), les bras de support extérieurs (7) déterminant un espace en fourche de réception de roues jumelées et les premiers supports de roues (9,22) étant orientés transversalement sur une partie substantielle de la distance séparant les bras de support extérieurs (7), de sorte qu'en utilisation le premier support de roue supporte les deux roues d'un ensemble de deux roues jumelées (12) et chaque support des seconds supports de roue supporte l'une des dites roues jumelées.

9. Dispositif selon la revendication 8, dans lequel les dits seconds supports de roues (13, 23), en configuration ouverte, recouvrent le premier support de roue (9,22).

10. Dispositif selon l'une quelconque des revendications précédentes comprenant un système d'interrupteur (16) sensible à la pression qui est porté par le premier support de roue (9,22) et qui est relié de façon active aux seconds supports de roue (13,23) pour actionner leur rotation quand une roue d'avion (12 A) est en position contre ledit premier support de roue.

11. Dispositif selon la revendication 10, comprenant deux systèmes d'interrupteur (16) disposés latéralement, en étant écartés l'un de l'autre, sur le dit premier support de roue pour être actionnés par les roues respectives (12A) d'un ensemble (12) de roues jumelées d'avion pour ne permettre la rotation des dits seconds supports de roue que quand l'ensemble de roues jumelées (12) est correctement disposé contre ledit premier support de roue.

12. Dispositif selon l'une quelconque des revendications précédentes, dans lequel les premier (9) et/ou seconds (13) supports engageant les roues sont réglables horizontalement sur leurs bras de support respectifs (8,3) pour faire varier leur distance depuis l'axe de rotation (Y-Y) des seconds supports, afin d'effectuer une compensation pour des roues d'avion de diamètre différent.

13. Machine de manutention d'avion au sol, comprenant un dispositif de soulèvement d'un ensemble de roues d'un avion tel que revendiqué dans l'une quelconque des revendications 1 à 12.
